(19) Europäisches Patentamt
European Patent Office
Office européen des brevets

(11) Veröffentlichungsnummer: **0 167 974**
**B1**

(12) # EUROPÄISCHE PATENTSCHRIFT

(45) Veröffentlichungstag der Patentschrift: **10.05.89**

(51) Int. Cl.⁴: **C 09 B 67/44** // C09B67/22

(21) Anmeldenummer: **85108219.8**

(22) Anmeldetag: **03.07.85**

(54) **Organische Carbonate enthaltende flüssige Farbstoffzubereitungen.**

(30) Priorität: **11.07.84 DE 3425512**

(43) Veröffentlichungstag der Anmeldung:
**15.01.86 Patentblatt 86/3**

(45) Bekanntmachung des Hinweises auf die Patenterteilung:
**10.05.89 Patentblatt 89/19**

(84) Benannte Vertragsstaaten:
**CH DE FR GB IT LI**

(56) Entgegenhaltungen:
**DE-A-2 020 350**
**FR-A-1 573 698**
**FR-A-2 388 027**
**FR-A-2 390 476**

(73) Patentinhaber: **BASF Aktiengesellschaft, Carl-Bosch- Strasse 38, D-6700 Ludwigshafen (DE)**

(72) Erfinder: **Dyllick- Brenzinger, Rainer, Dr., Weinheimer Strasse 44, D-6940 Weinheim (DE)**

**EP 0 167 974 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft flüssige, im wesentlichen wasserfreie Farbstoffzubereitungen von Solventfarbstoffen, enthaltend ein organisches Carbonat oder ein Gemisch organischer Carbonate, gegebenenfalls in Kombination mit weiteren Lösungsmitteln.

Unter organischen Carbonaten werden erfindungsgemäß Verbindungen der Formeln I oder II

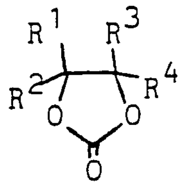 I 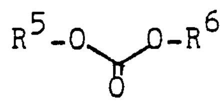 II

verstanden, in der die Reste $R^1$ bis $R^6$ unabhängig voneinander Wasserstoff oder gegebenenfalls substituierte Alkyl-, Alkenyl- oder Cycloalkylreste und $R^5$ und $R^6$ darüberhinaus auch gegebenenfalls substituierte Arylreste sind.

Alkylreste $R^1$ bis $R^6$ haben insbesondere 1 bis 8 C-Atome und können z. B. noch durch Chlor, Hydroxy oder $C_1$- bis $C_4$-Alkoxy substituiert sein. Einzelne Reste $R^1$ bis $R^6$ sind z. B. $CH_3$, $C_2H_5$, $C_2H_4Cl$, $C_3H_7$-(n) und -(i), $C_3H_6Cl$, $CH_2$-$CH=CH_2$, $CH(CH_3)CH_2Cl$, $C_4H_9$-(n) und -(i), $CH(CH_3)C_2H_5$, $C_4H_8Cl$, $C_5H_{11}$-(n) und -(i), $CH_2C(CH_3)_3$, $C(CH_3)_2C_2H_5$, 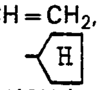, $C_6H_{13}$, $CH(CH_3)C_3H_7$, $CH(CH_3)CH(CH_3)_2$, $CH(CH_3)CH_2CH=CH_2$, $CH_2CH(CH_3)C_2H_5$, $CH_2CH(CH_3)CH(CH_3)_2$, $CH_2CH(C_2H_5)C_2H_5$, $CH_2CH(CH_3)C_3H_7$, $C_7H_{15}$, $CH(C_2H_5)C_4H_9$, $C_8H_{17}$, $CH_2CH(C_2H_5)C_4H_9$, $CH(CH_3)C_3H_6CH(CH_3)_2$, $C_2H_4OH$, $C_3H_6OH$, $C_4H_8OH$, $C_6H_{12}OH$, $C_2H_4OCH_3$, $C_2H_4OC_2H_5$, $C_2H_4OC_3H_7$, $C_2H_4OC_4H_9$, $C_2H_4OC_6H_5$, $C_2H_4OCH_2C_6H_5$, $C_2H_4OC_2H_4OH$, $C_2H_4OC_2H_4OCH_3$, $C_2H_4OC_2H_4OC_2H_5$, $C_2H_4OC_2H_4OC_3H_7$, $C_3H_6OC_2H_4OH$, $C_3H_6OC_4H_8OH$, $C_2H_4CH(OCH_3)CH_3$, $C_3H_6OCH_3$, $C_3H_6OC_2H_5$, $C_3H_6OC_3H_7$ oder $C_3H_6OC_4H_9$.

Für $R^5$ und $R^6$ sind zusätzlich durch Chlor, Methyl oder Methoxy substituiertes und insbesondere unsubstituiertes Phenyl zu nennen.

Besonders bevorzugt, insbesondere aufgrund der Verfügbarkeit, ist die Verbindung der Formel

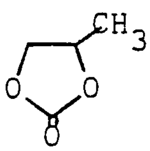

Solventfarbstoffe, die in den Zubereitungen enthalten sein können, sind insbesondere nicht polare Verbindungen, wie die im Colour Index unter dem Stichwort Solventfarbstoffe verzeichneten.

Aus der FR-A-2 390 476 ist bekannt, daß sich wäßrige Lösungen kationischer Farbstoffe durch Zusatz von Propylencarbonat stabilisieren lassen.

Wegen der in der Regel geringen Wasserlöslichkeit der Verbindungen der Formel I und/oder II werden sie als Zusatz zu den, im wesentlichen wasserfreien Farbstoffzubereitungen verwendet. Die Verbindungen der Formel I und/oder II können allerdings auch als alleiniges Lösungsmittel verwendet werden. Überraschenderweise wurde dabei gefunden, daß insbesondere die Lagerstabilität von Verbindungen der Formel I und/oder II enthaltenden Zubereitungen sehr verbessert wird, insbesondere macht sich dies im Bereich der Temperaturen $\leqslant 0°C$ bemerkbar. Es treten keinerlei Ausfällungen oder Kristallisationen auf und zwar auch nicht nach längerer Lagerung.

Die Verbindungen der Formel I und/oder II werden üblicherweise in Mengen von 1 bis 80 %, vorzugsweise 3 bis 20 % zugesetzt. Die günstigste Menge läßt sich leicht durch Vorversuche ermitteln.

Die erfindungsgemäßen Farbstoffzubereitungen eignen sich sehr gut zum Färben von beispielsweise Lösungsmitteln, Mineralölprodukten, Überzügen und Druckfarben.

**Beispiel 1**

Eine Lösung aus 65 Teilen eines Farbstoffs, hergestellt durch Mischkupplung eines diazotierten aromatischen Amingemisches der Formeln

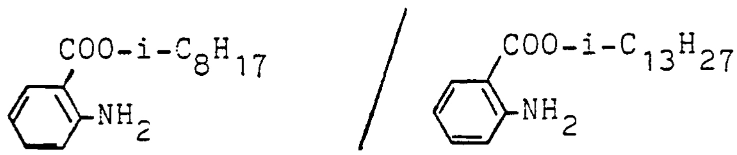

auf

auf

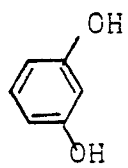

in 28 Teilen eines Aliphaten-/Aromatengemisches (Shellsol® AB) und 7 Teilen

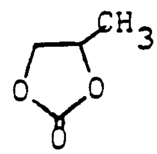

wurde während 6 Wochen bei 0°C gerührt (Fina-Test). Während dieser Zeit traten keine Abscheidungen oder Kristalle auf und die Lösung blieb vollständig klar. Ein analoger Versuch ohne Zusatz von Propylencarbonat führte bereits nach 14 Tagen zu deutlichen Abscheidungen.

**Beispiel 2**

Eine Lösung aus 32,5 Teilen eines Farbstoffgemisches bestehend aus 85 Teilen der Verbindung der Formel

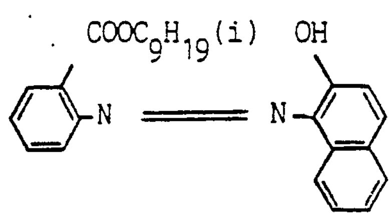

und 15 Teilen der Verbindung der Formel

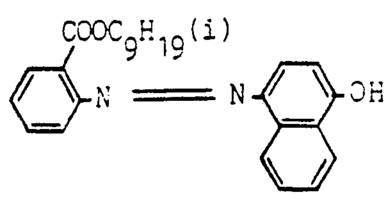

in 14,5 Teilen Shellsol AB und 3,5 Teilen Propylencarbonat wurde während 3 Wochen bei 0°C gerührt. Während dieser Zeit traten keine Abscheidungen oder Kristalle auf und die Lösung blieb vollständig klar. Erst bei weiterem Rühren bei 0°C trat eine merkliche Kristallisation auf.

Eine Anhebung der Konzentration des Propylencarbonats auf Kosten des Shellsol AB auf 10 oder mehr Teile führte zu einer stabilen Flüssigeinstellung. Auch nach 6 Wochen war noch keine Kristallisation erkennbar. Wurde statt Propylencarbonat Diphenylcarbonat eingesetzt, so wurde ebenfalls eine verbesserte 0°C-Stabilität der Flüssigeinstellung festgestellt. Allerdings ist die Löslichkeit von Diphenylcarbonat in Shellsol AB im Gegensatz zu der von Propylencarbonat begrenzt.

Bei einem Versuch analog dem oben beschriebenen, in welchem anstelle der 3,5 Teile Propylencarbonat Shellsol AB verwendet wurde, trat bereits nach 1 Woche eine deutliche Kristallisation ein.

Bei Verwendung von Farbstoffgemischen in welchen die Verhältnisse in den angegebenen Grenzen variiert wurden

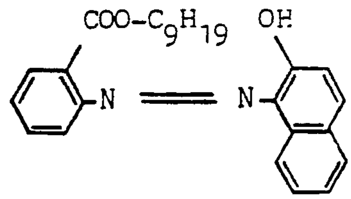

70-90 Teile

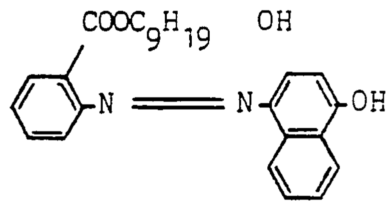

30-10 Teile

lieferten vergleichbare Zusätze von Propylencarbonat ebenfalls lagerstabile Flüssigeinstellungen.

Auch bei diesen Farbstoffgemischen läßt sich durch Anheben der Mengen von Propylencarbonat (Ersatz des Shellsol AB) die Lagerstabilität der Lösungen noch weiter erhöhen.

**Beispiel 3**

Eine Lösung aus 60 Teilen des Farbstoffs der Formel

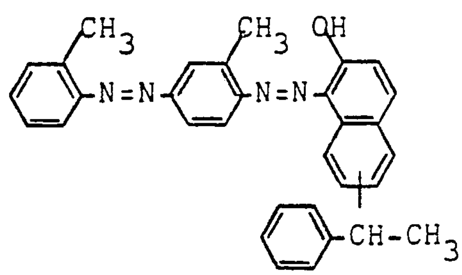

und 40 Teilen Shellsol AB wurde während 3 Wochen bei 0°C gerührt. Nach dieser Zeit traten deutliche Abscheidungen aus der Lösung auf.

Bei Verwendung eines Lösemittelgemisches aus 10 Teilen Propylencarbonat und 30 Teilen Shellsol AB erhielt man eine über 6 Wochen bei 0°C stabile Flüssigzubereitung.

**Beispiel 4**

Eine Lösung aus 60 Teilen des Farbstoffs der Formel

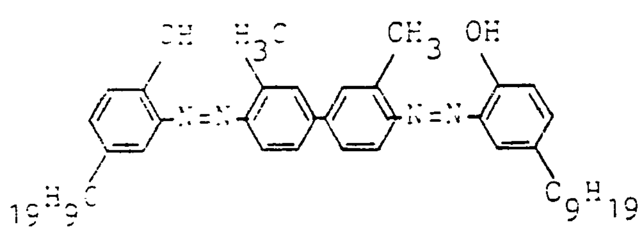

und 40 Teilen Shellsol AB wurde während 4 Wochen bei 0°C gerührt. Nach dieser Zeit traten deutliche Abscheidungen aus der Lösung auf.

Durch Änderung des Lösemittelgemisches zu 7 Teilen Propylencarbonat und 33 Teilen Shellsol AB erhielt

man eine über mindestens 7 Wochen bei 0°C stabile Flüssigzubereitung.

**Beispiel 5**

Eine Lösung aus 60 Teilen des Farbstoffs der Formel

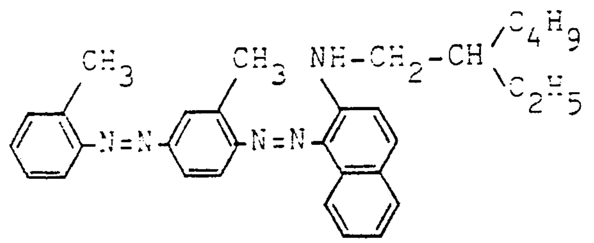

und 40 Teilen Shellsol AB wurde während 30 Tagen bei 0°C gerührt. Nach dieser Zeit traten deutliche Abscheidungen aus der Lösung auf.

Durch Änderung des Lösemittelgemisches (10 Teile Propylencarbonat und 30 Teile Shellsol AB) erhielt man eine über 7 Wochen bei 0°C stabile Flüssigzubereitung.

**Beispiele 6 bis 8**

Analoge Versuche mit den Farbstoffen der Formeln

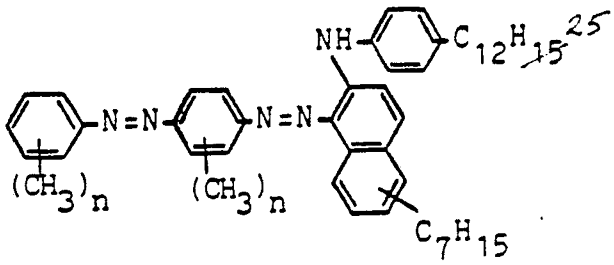

n = 0-2

(Homologengemisch)

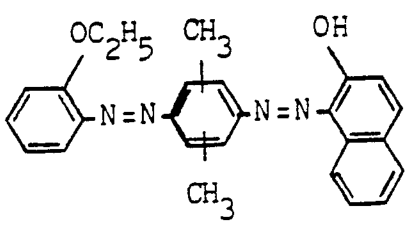

(Isomerengemisch)

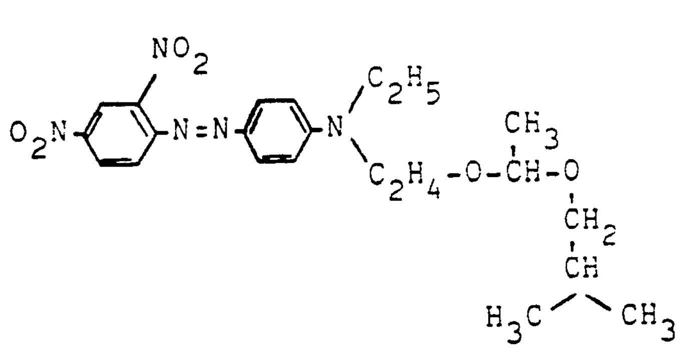

führten bezüglich der 0°C-Lagerstabilität ebenfalls zu verbesserten Flüssigeinstellungen.

**Beispiel 9**

Eine Lösung aus 25 Teilen eines Farbstoffgemisches der Formeln

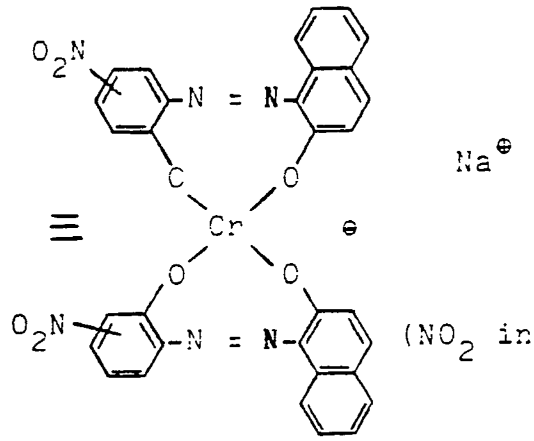

($NO_2$ in 4- oder 5-Stellung)

in 55 Teilen 1-Methoxipropanol-2 und 20 Teilen n-Butyl-diethylenglykol wurde während 14 Tagen bei 0°C gerührt. Dabei trat eine deutliche Kristallisation ein. Ein analoger Versuch bei dem 15 Teile des 1-Methoxipropanol-2 durch 15 Teile Propylencarbonat ersetzt wurden, zeigte bei 0°C auch nach 4 Wochen noch keine Abscheidungen.

**Beispiel 10**

Eine Lösung aus 25 Teilen eines Farbstoffgemisches erhalten durch Kobaltierung der Farbstofe der Formeln

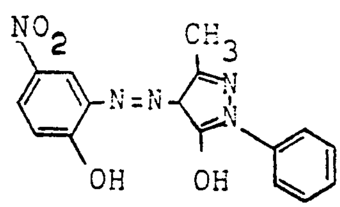

und

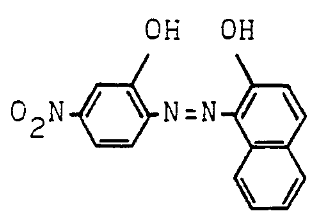

(als Natriumsalze)

55 Teilen 1-Methoxipropanol-2 und und 20 Teilen n-Butyl-diethylenglykol wurde während 10 Tagen bei 0° G gerührt. Dabei trat eine deutliche Kristallisation ein. Ein analoger Versuch in welchem 20 Teile 1-Methoxipropanol-2 durch 20 Teile Propylencarbonat ersetzt wurden, zeigte bei 0°C auch nach 4 Wochen noch keine Abscheidungen.

**Beispiel 11**

Eine Lösung von 50 Teilen des Farbstoffs der Formel

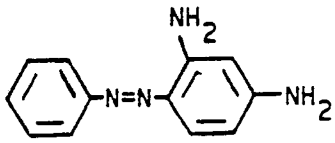

in 120 Teilen Propylencarbonat ist auch nach wochenlanger Lagerung bei 0, 20 oder 60° C einwandfrei, d.h., es haben sich keinerlei Abscheidungen gebildet.

**Beispiel 12**

Eine Lösung von 50 Teilen des Farbstoffs der Formel

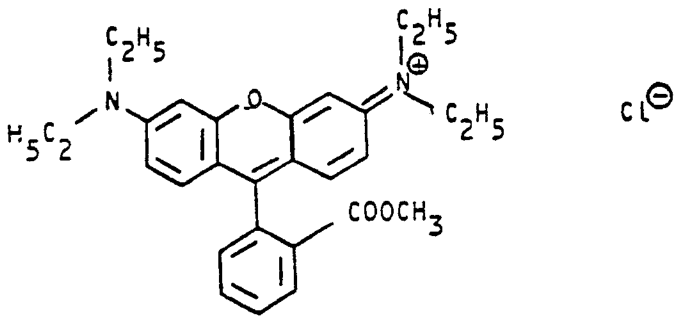

in 120 Teilen Propylencarbonat ist auch nach wochenlanger Lagerung bei 0, 20 oder 60° C noch frei von Abscheidungen.

**Beispiel 13**

Eine Lösung von 10 Teilen des Farbstoffs der Formel

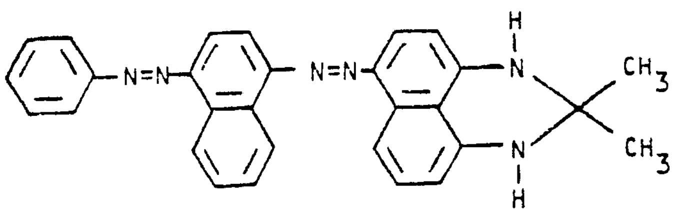

in 120 Teilen Propylencarbonat ist auch nach wochenlanger Lagerung bis herab zu 0° C beständig.

**Beispiel 14**

Eine Lösung von 15 Teilen des Farbstoffs der Formel

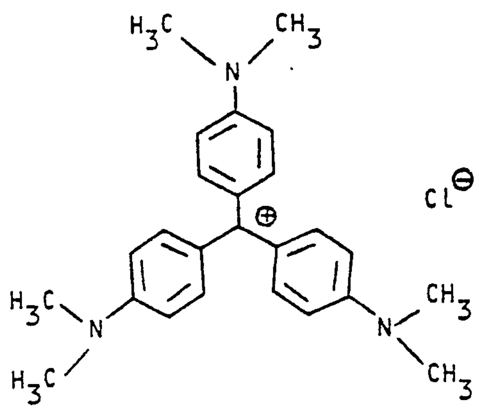

in 120 Teilen Propylencarbonat bildet auch nach wochenlanger Lagerung bei 0, 20 oder 60°C keine Abscheidungen.

**Patentansprüche**

1. Flüssige, im wesentlichen wasserfreie Farbstoffzubereitungen von Solventfarbstoffen, enthaltend ein organisches Carbonat oder ein Gemisch organischer Carbonate, gegebenenfalls in Kombination mit weiteren Lösungsmitteln.

2. Farbstoffzubereitungen gemäß Anspruch 1, enthaltend als organisches Carbonat die Verbindung der Formel

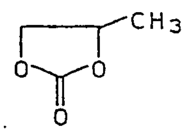

3. Verwendung der Farbstoffzubereitungen gemäß Anspruch 1 zum Farben von Lösungsmitteln, Mineralölprodukten, Überzügen oder Druckfarben.

**Claims**

1. A liquid, essentially water-free formulation of a solvent dye, containing an organic carbonate or a mixture of organic carbonates with or without a further solvent.

2. A dye formulation as claimed in claim 1, which contains, as the organic carbonate, the compound of the formula

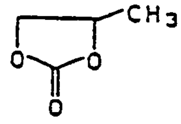

3. Use of a dye formulation as claimed in claim 1 for coloring solvents, mineral oil products, coatings or printing inks.

**Revendications**

1. Préparation colorantes liquides, essentiellement anhydres, de colorants dits "solvants", contenant un carbonate organique ou un mélange de carbonates organiques, eventuellement en combinaison avec d'autres solvants.

2. Préparations colorantes selon la revendication 1, contenant comme carbonate organique le composé de formule.

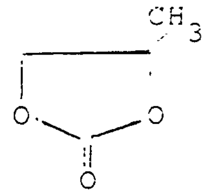

3. Utilisation des préparations colorantes selon la revendication 1 pour la coloration de solvants, produits d'huile minérale, revêtements ou encres d'imprimerie.